# EUROPEAN PATENT SPECIFICATION

(11) **EP 2 495 682 B1**
(45) Date of publication and mention of the grant of the patent: **25.07.2018**
(21) Application number: 09850798.1
(22) Date of filing: 30.10.2009
(51) Int. Cl.: G06K 7/10, G03B 15/02, G03B 15/03

(54) **ILLUMINATION OPTICAL SYSTEM OF IMAGE CAPTURING DEVICE**
OPTISCHES BELEUCHTUNGSSYSTEM UND BILDPROJEKTIONSVORRICHTUNG
SYSTÈME OPTIQUE D'ÉCLAIRAGE DE DISPOSITIF DE CAPTURE D'IMAGE

(43) Date of publication of application: 05.09.2012
(73) Proprietor: Fujitsu Frontech Limited, Inagi-shi Tokyo 206-8555 (JP)
(72) Inventor: YAMAZAKI, Kozo, Inagi-shi Tokyo 206-8555 (JP); IWAGUCHI, Isao, Inagi-shi Tokyo 206-8555 (JP)
(74) Representative: Wilding, Frances Ward
(86) International application number: PCT/JP2009/005789
(87) International publication number: WO 2011/052018

(56) References cited:
- EP-A1- 1 830 304
- EP-A2- 0 840 107
- JP-A- 56 125 705
- JP-A- 2002 049 324
- JP-A- 2004 171 192
- US-A1- 2005 087 601
- US-A1- 2008 253 005

## Description

### FIELD

The present invention relates to an illumination optical system of an image capturing device that applies light to an object to be imaged to capture an image by receiving reflected light from the object to be imaged by means of an image capturing element.

### BACKGROUND

In information reading image capturing devices that read printed information such as barcodes on paper and biometric information such as palm veins, even though the reflected light of light applied on the surface of a medium should produce a region that is uniform in brightness, a locally high luminance portion may be produced, and consequently the reflected component of the portion becomes image noise, which is an undesirable phenomenon.

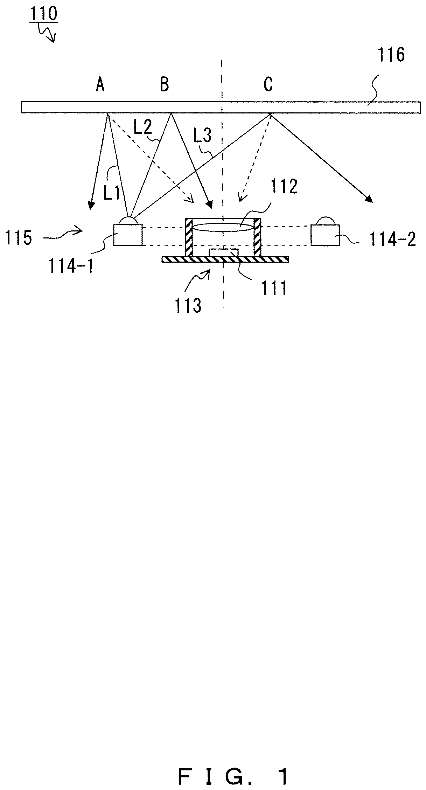

FIG. 1 illustrates a configuration of a conventional image capturing device having an illumination optical system arranged around an image capturing optical system.

This image capturing device 110 has an illumination optical system 115 having plural light-emitting elements (LED) 114-1, 114-2,... arranged around an image capturing optical system 113 including an image sensor 111 and a lens 112.

When rays of light L1, L2, and L3 from the light-emitting element 114-1 illuminate an object 116, the output light rays L1, L2, and L3 reflect at points A, B, and C on the object 116, respectively. At that time, the rays of light reflected at points A, B, and C are received in the image sensor 111, and an image of the points A, B, and C is formed. Here, the light reflected in a direction indicated by a solid line is specular light, and the light reflected in a direction indicated in a dotted line is scattering light. The specular light has a higher intensity than the scattering light.

Additionally, although the specular light rays reflected at points A and C do not enter the lens 112, the specular light reflected at point B does enter the lens 112. For that reason, a local high luminance region (noise) is generated on the image obtained by receiving the specular light.

It should be noted that in FIG. 1, plural light-emitting elements 114-1, 114-2, ... are arranged around the image capturing optical system 113 as illumination light sources. This is the same for a case in which the output light from the plural light-emitting elements 114-1, 114-2, ... arranged in a circular pattern is output from an upper end surface of a light guide (not illustrated) through the light guide.

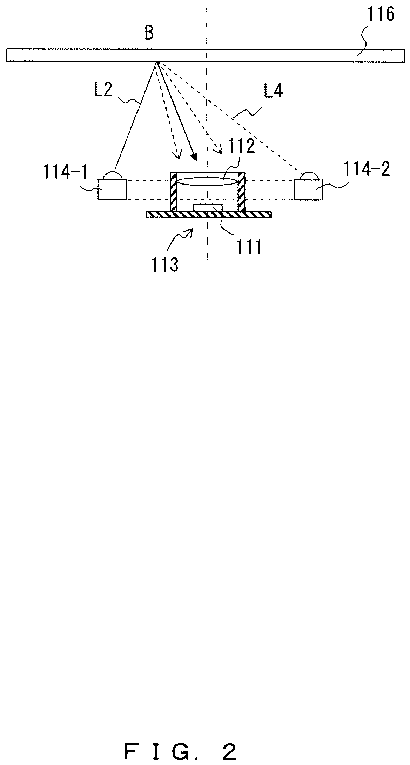

Next, the image capture of the point B on the object 116 is explained based on FIG. 2.

For example, illumination light L4 from the light-emitting element 114-2 becomes scattering light as indicated by dotted lines at point B. The image at point B is created through the scattering light. However, the specular light (solid line) of the light ray L2 from the light-emitting element 114-1 is superimposed as noise on this image. This specular noise becomes larger as the intensity of the specular light is higher than that of the scattering light.

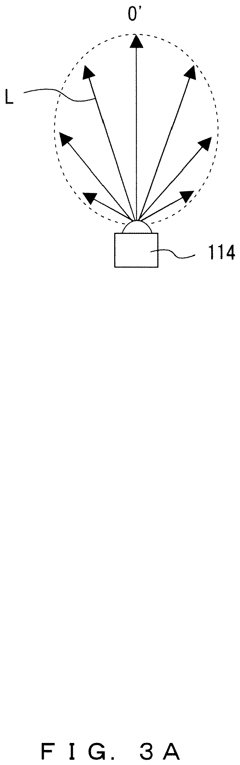

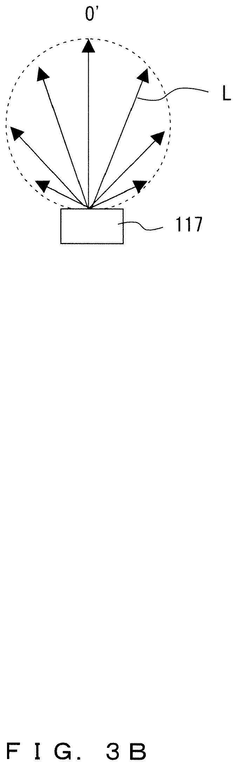

Here, FIG. 3A is a diagram illustrating an example of an optical axis and an intensity distribution of the output light from the light-emitting element 114. FIG. 3B is a diagram illustrating an example of an optical axis and intensity distribution of output light from the light guide 117.

In other words, both the output light L from the light-emitting element 114 and the output light L from the light guide 117 (a transparent cylinder body guiding light) have their maximum intensity at the optical axis O' and the intensity becomes lower as the angle from the optical axis 0' becomes larger.

Accordingly, the light L2 from the light-emitting element 114-1 in FIG. 2 has a higher intensity as the angle gets closer to the optical axis O', and as a result, the specular noise becomes larger.

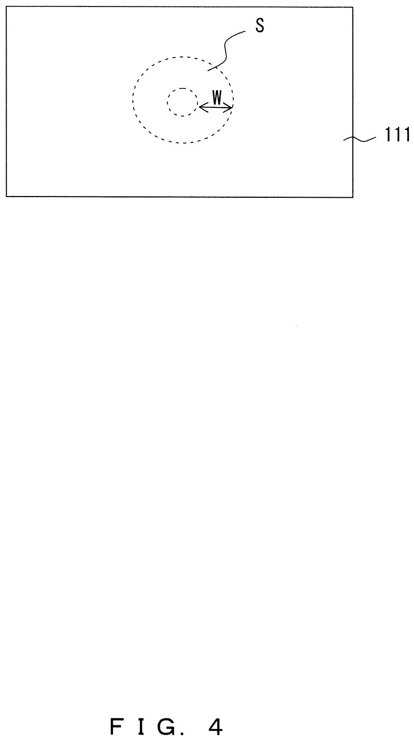

FIG. 4 illustrates an example of specular noise in the image sensor 111.

In the above-described FIG. 2, the point B on the object 116, which is in the middle of the light-emitting element 114-1 and the lens 112, is a specular point. For that reason, in a case of the light-emitting elements 114-1, 114-2, ..., arranged in a circular-ring pattern, a circular-ring specular noise region S is generated as illustrated in FIG. 4.

It should be noted that the width W (width of the specular region) of the specular noise region S depends on the diffusion rate of the surface of the object 116 and the size of the entrance pupil (effective aperture) of the lens 112, and the region does not always become a circular-ring pattern, but may become circular.

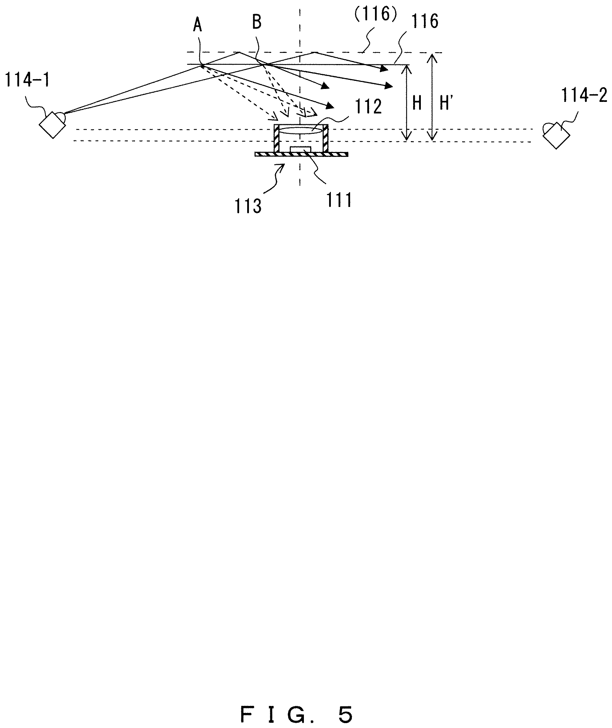

Next, FIG. 5 illustrates a conventional example of an illumination optical system that reduces the specular noise. As illustrated in FIG. 5, the light-emitting elements 114-1 and 114-2 are placed away from the image capturing optical system 113, and light is applied to the object 116 at an angle, which allows the system to have illumination without generating specular noise. However, in such a case, the device has to be large in size because a light source region larger than an image capturing region is needed.

In this case, also, rays of light from the plural light-emitting elements 114-1, 114-2,... are synthesized at a steep angle and illuminate the object 116. When placement height H" of the object 116 from the image sensor 111 is changed to a height H', the synthesis of the illumination rapidly collapses, and the obtained image changes (shallow depth).

There is no problem in document readers in which an object is placed on a window since the placement height of the object does not change. However, in a case in which the object is a barcode or a palm, the placement height of the object changes.

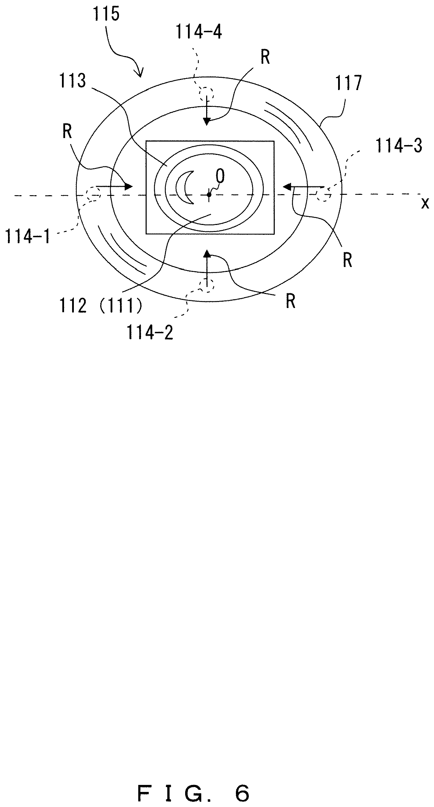

Then, in the past, as illustrated in FIG. 6, in the palm vein image capturing device, for example, an illumination optical system 115 has been made by combining light-emitting elements 114-1, 114-2, ... arranged in the circular-ring pattern with a ring-shaped light guide 117. This light guide 117 prevents the light from the light-emitting elements 114 from deviating from the light path. This illumination optical system 115 is arranged around the image capturing optical system 113 constituted of the lens 112 and the image sensor 111.

In this case, however, specular noise is generated at the image capturing optical system. For that reason, polarization plates (not illustrated) orthogonal to each other are placed above the light-emitting elements 114-1, 114-2, ... and the image sensor 111. However, this system has a problem of increased cost and low light-use efficiency.

It should be noted that an arrow R in FIG. 6 indicates an output direction of the optical axis of the illumination light.

In FIG. 6, a ring-shaped light guide 117 is arranged around the image capturing optical system 113, and illumination light R is output from the upper surface of this light guide 117. In addition, the light-emitting elements 114 and light guide 117 are configured to be axially symmetrical with respect to a lens optical axis O. Furthermore, the optical axis of the illumination light is present in a radial direction connecting the output point on the light guide 117 and the lens optical axis O.

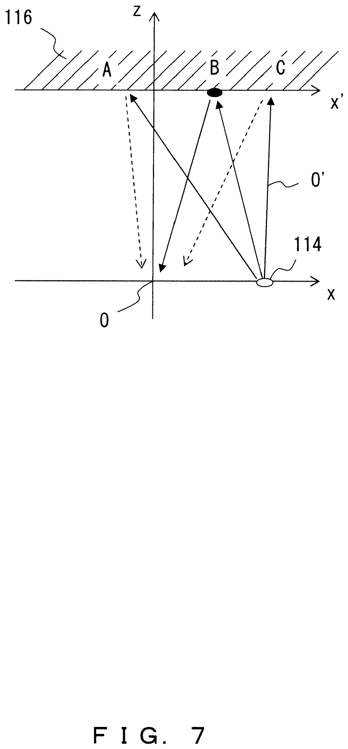

FIG. 7 illustrates the relationship between the illumination light and reflected light from the object 116.

In this case, strong specular noise is generated in the lens optical axis O in the image capturing system by the reflected light from the proximity of point B. Of the reflected light from points C and A, the directly reflected light from a light source may cause specular noise. This is because the directly reflected light may enter the lens optical axis O, depending on the condition of the surface of points C and A.

As the above-described illumination optical system, technologies in Patent Document 1 and Patent Document 2 have been proposed.

In Patent Document 1, two prism sheets constituting a surface light source are laminated so that formation faces of prism threads can be mutually facing inward, and that the directions of those prism threads can be crossed at 90 degrees. As a result, the light output from the prism sheets becomes refracted light having directionality in two directions, preventing locally strong light from entering the surface of an object to be read.

Patent Document 2 discloses a back light device configured of a light-transmissive sheet with a light diffusion property and a light emitting element which is disposed at the back of the light-transmissive sheet, and a prism sheet which is disposed between the light emitting element and the light-transmissive sheet and is disposed so that the prism surface faces to the light emitting element.

However, although Patent Document 1 has two prism sheets and the output light has directionality in two directions, one of illumination light which is output light separated in two directions is output in a substantially perpendicular direction with respect to the surface of the object. As a result, the direct light from the light source enters the lens, increasing the specular noise.

In Patent Document 2, the output light from the prism sheet becomes refracted in a direction away from a normal line of a planar portion, which also results in the direct light from the light source entering the lens and an increase in the specular noise.

In other words, both Patent Document 1 and Patent Document 2 have the problem of having a large amount of specular noise.

Patent Document 3 discloses a system and method for illuminating a subject using a light pipe that transmits light from a source, such as an LED ring illuminator to an outlet that directs the light appropriately as either bright field illumination, dark field illumination or both.

Patent Document 4 discloses an image pickup device or method and an image processing device or method which directly projects a region specifying image on an object to specify and focus the object within a predetermined region without employing any image display unit so as to take an image of the object and judge the quality of the taken image.

### Related Art Document

### Patent Document

Patent Document 1: Japanese Laid-open Patent Publication No. 2004-171192
Patent Document 2: Japanese Laid-open Patent Publication No. 2002-49324
Patent Document 3: US2005/087601A1
Patent Document 4: EP0840107A2

### SUMMARY

The present invention is defined in the independent claim. Optional embodiments are set out in the dependent claims.

### BRIEF DESCRIPTION OF DRAWINGS

FIG. 1 is a diagram illustrating a configuration of a conventional image capturing device having an illumination optical system arranged around an image capturing optical system;
FIG. 2 is a diagram illustrating a configuration of the conventional image capturing device having the illumination optical system arranged around the image capturing optical system;
FIG. 3A is a diagram illustrating an example of an optical axis and an intensity distribution of an output light from a light-emitting element;
FIG. 3B is a diagram illustrating an example of an optical axis and an intensity distribution of an output light from the light guide;
FIG. 4 is a diagram illustrating an example of specular noise in an image sensor;
FIG. 5 is a diagram illustrating a conventional example of an illumination optical system that reduces the specular noise;
FIG. 6 is a diagram illustrating a conventional example of a palm vein image capturing device;
FIG. 7 is a diagram illustrating a relationship between illumination light and reflected light from an object;
FIG. 8 is a cross-sectional diagram of an image capturing device of First Example not part of the invention;
FIG. 9 is a plan view of an illumination optical system and an optical unit;
FIG. 10 is a perspective view of the illumination optical system;
FIG. 11 is a plan view of a prism plate;
FIG. 12 is a diagram illustrating a relationship between the illumination light to an object to be imaged and reflected light from the object to be imaged;
FIG. 13A is a diagram illustrating the control state of the illumination light in an output direction by a prism plate;
Fig. 13B is a diagram illustrating a state in which microasperity is formed on the output surface of the prism plate;
FIG. 14 is a diagram illustrating an example, not part of the invention, in which a ring-shaped prism plate is configured of plural discrete prism pieces;
FIG. 15 is a simple control block diagram of the image capturing device;
FIG. 16 is a cross-sectional view of the image capturing device of First Embodiment;
FIG. 17 is a diagram illustrating an illumination optical system of First Embodiment;
FIG. 18A is a diagram illustrating the appearance of the prism plate in FIG. 17; and
FIG. 18B is an enlarged perspective view of a portion B in FIG. 18A.

### DESCRIPTION OF EMBODIMENTS

In the following description, the embodiments of the present invention are explained with reference to the drawings.

### [First Example]

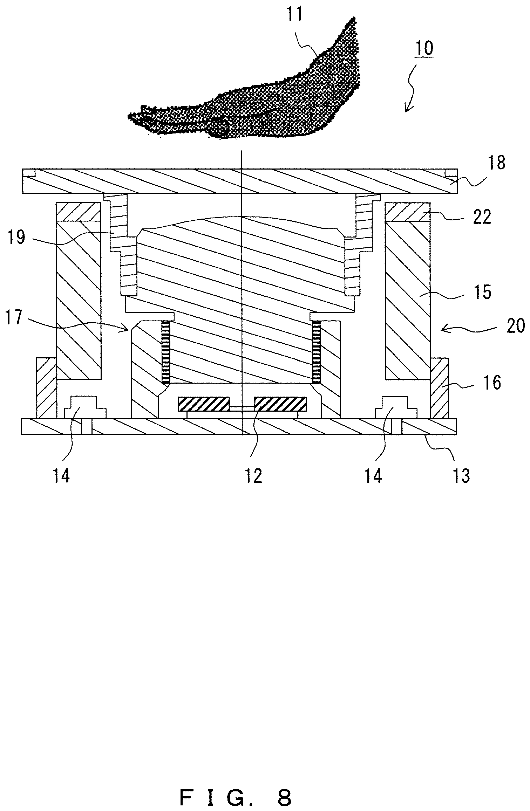

FIG. 8 is a cross-sectional diagram of an image capturing device in which an optical system , not part of the present invention, is adopted.

The image capturing device 10 is a device that applies light to an object (e.g. a palm) 11 to be imaged and captures an image of the object by receiving the light reflected from the object 11 to be imaged by an image sensor 12 serving as an imaging element. This image sensor 12 is mounted in a circuit board 13.

The image capturing device 10 includes LEDs 14 that serve as plural light-emitting elements arranged around the image sensor 12, a ring-shaped light guide 15 that guides the light from the plural LEDs 14 to the object 11 to be imaged, a ring-shaped prism plate 22 placed on the output surface of the light guide 15, and an optical unit 17 that is housed within the ring of the prism plate 22 and guides the reflected light from the object 11 to be imaged to the image sensor 12.

The ring-shaped light guide 15 is supported by a support member 16. A visible light cut filter plate 18 is provided over the light guide 15 and the optical unit 17.

It should be noted that the LEDs 14, the light guide 15, and the prism plate 22 constitute the illumination optical system 20 of the image capturing device 10. This illumination optical system 20 is explained later. In the present example, the illumination optical system 20 and the optical unit 17 are mounted together on a single circuit board 13. As a result, a compact and low cost device can be provided.

The image sensor 12 is provided in the center of the circuit board 13, and plural LEDs 14 are mounted in a circular pattern around the image sensor 12. In addition, a light receiving element, which is not illustrated in the drawing, is provided on the circuit board 13 to perform an automatic power control so that the amount of light from the LEDs 14 becomes a prescribed value.

Four distance measurement light-emitting elements, which are not illustrated in the drawing, are provided on the four corners of the circuit board 13. The distance and inclination of the object 11 to be imaged (a palm in the present example) are detected from these four distance measurement light-emitting elements.

Next, the ring-shaped light guide 15 is provided over the plural LEDs 14 arranged on the circuit board 13. This light guide 15 is for example composed of resin (or glass etc.) and guides the light from the plural LEDs 14 upward, and uniformly irradiates the object 11 to be imaged with the light through the prism plate 22. This can be achieved by guiding the light from the LED 14 without leaking from its optical path. In order to do so, the light guide 15 is formed in a ring shape so as to match the arrangement of the LEDs 14.

Here, the ring shape refers to an annular shape having a hole in the center, such as a circular ring, a square ring, an oval ring, or an elliptical ring.

Moreover, the optical unit 17 is attached to the circuit board 13 over the image sensor 12 located approximately at the center of the circuit substrate 13 and within the ring-shaped light guide 15. This optical unit 17 includes a lens optical system such as condenser lenses.

As described above, because of the ring shape of the light guide 15, the device can be kept compact by housing the optical unit 17 within the ring. Additionally, in order to prevent the entrance of the light from the outside of the image capturing range or the entrance of the light leaking from the light guide 15, a hood 19 is attached to the visible light cut filter 18.

It should be noted that the visible light cut filter 18 cuts visible light components entering the image sensor 12 from the outside. As a result, it is possible to prevent reduction in the imaging accuracy even if the LEDs 14 are kept at a low power. This is because the noise component from the external light is small.

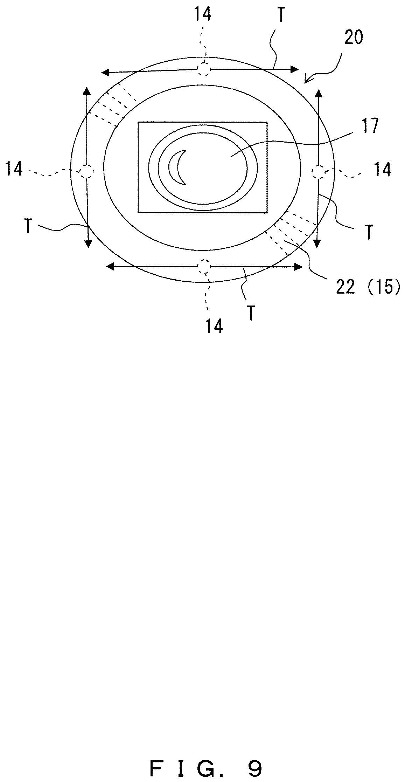

Next, with reference to FIG. 9 to FIG. 11, the illumination optical system 20 of the present example is explained.

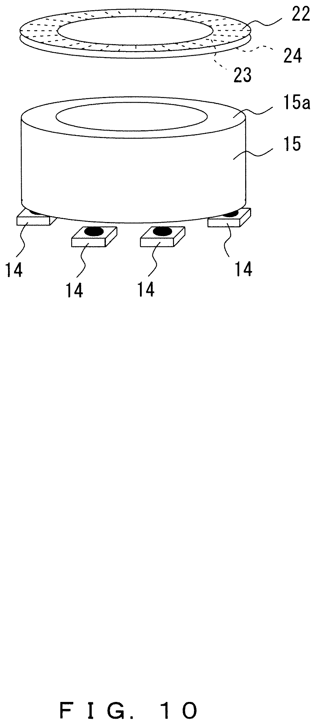

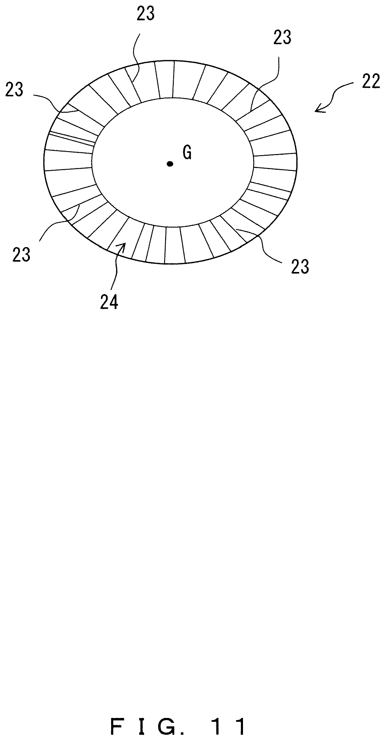

FIG. 9 is a plane view of the illumination optical system 20 and the optical unit 17, FIG. 10 is a perspective view of the illumination optical system 20, and FIG. 11 is a plane view of the prism plate 22.

The illumination optical system 20 includes plural LEDs 14 arranged in a circular pattern, a ring-shaped light guide 15, and a ring-shaped prism plate 22 arranged on the output surface 15a of the light guide 15. The prism plate 22 has a prism surface 24 with a row of prisms that has a number of radially arranged edge lines 23 and that is formed circumferentially. This prism surface 24 faces the LEDs 14 (the output surface 15a of the light guide 15) (see FIG. 10).

It should be noted that although four LEDs 14 are provided in FIG. 9, this is merely for expediency of explanation, and in reality a larger number of LEDS 14 are arranged in a circular pattern.

This prism surface 24, in this manner, is laid on top of the output surface 15a of the light guide 15 (not adhered, but sandwiching a layer of air) so as to face it, and the illumination light is applied to the prism surface 24.

It should be noted that although the ring-shaped prism plate 22 has an annular shape in the present example, the shape can be any shape that have a through-hole in the center such as a square ring, an oval ring, or an elliptical ring.

Additionally, the prism surface 24 has a number of radial edge lines 23. It is preferable for these edge lines 23 to be located at equal intervals. However, they are not necessarily at equal intervals. Moreover, the edge lines 23 are preferably formed radially around a center G in FIG. 11, but they are not limited to this formation. For example, the edge lines 23 do not have to be exactly oriented toward the center G, but the edge lines 23 may be formed so as to be approximately oriented toward the center G. This is similarly applicable to the prism plate 22 in a square ring shape, an oval ring shape, and an elliptical ring shape.

As described above, in the present example, the optical axis of the output of the illumination light from the prism plate 22 is directed tangentially rather than the radially from the center G (see arrows T in FIG. 9). In this manner, the illumination light from the prism plate 22 is directed orthogonally to the edge lines 23 so as not to be directed to the edge lines 23 direction.

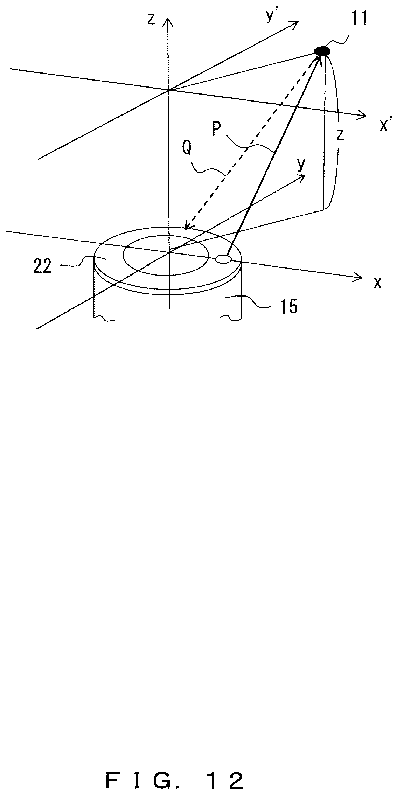

FIG. 12 is a diagram illustrating the relationship between illumination light P directed at the object 11 to be imaged and reflected light Q from the object 11 to be imaged.

In FIG. 12, since the optical axis of the illumination light P is inclined in tangentially to the light guide 15, the (entering) illumination light P directed toward the object 11 to be imaged located at the level of Z irradiates the object 11 to be imaged while being inclined in a direction of the axis y' in the drawing.

Accordingly, specular light does not enter the center (Z axis) of the optical unit 17; only scattered light (reflected light Q) enters the center. It should be noted that the light that passed through the prism plate 22 does not exit orthogonally to the output surface.

It should also be noted that as described above, the range of the specular light depends on the diffusion rate of the surface of the object 11 to be imaged and the entrance pupil diameter of the lens of the optical unit 17. For that reason, it is not always true that the specular light does not enter the center of the optical unit 17 at all, but the amount of light that enters is at least reduced.

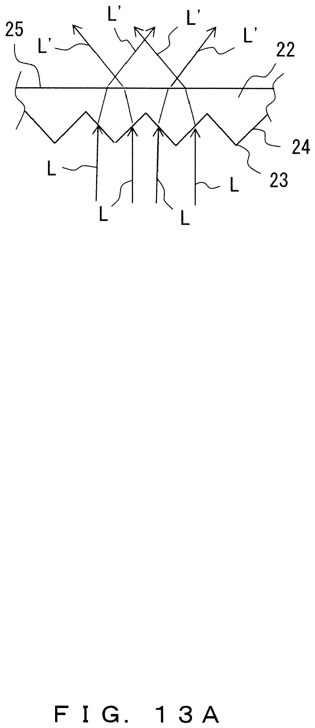

FIG. 13A is a diagram illustrating the control state of the illumination light in an output direction by a prism plate 22.

As illustrated in FIG. 13A, when the prism surface 24 of the prism plate 22 is laid on top of the output surface 15a of the light guide 15 (not adhered, but sandwiching a layer of air) so as to face it, and the illumination light is applied to the prism surface 24 from below, all of light L traveling straight up leans in a direction of inclined L' and exits.

In the present example, the prism plate 22 has a prism surface 24 with a row of prisms that has a number of radially arranged edge lines 23 formed circumferentially. As a result, the light exiting in the radial direction from the light guide 15 exits leaning in a direction orthogonal to all radii (tangentially) . For that reason, the light exiting the light guide 15 does not exit in the radial direction of the light guide 15. Consequently, specular noise would not be generated in the image sensor 12. As a result, it is possible to realize an illumination optical system 20 that can reduce the specular reflection.

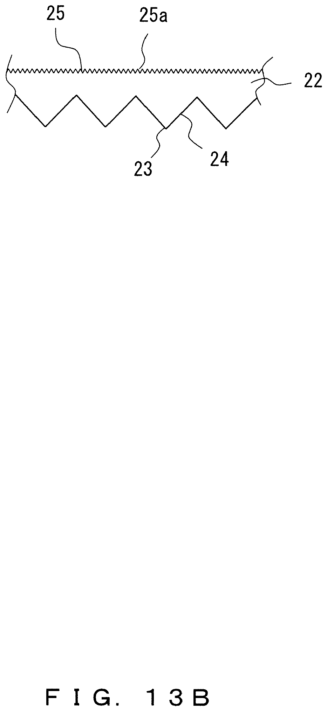

FIG. 13B is a diagram illustrating a state in which microasperity is formed on the output surface of the prism plate 22.

As illustrated in FIG. 13B, a microasperity 25a is formed as a diffusion surface by blasting technology (such as sandblasting) on the output surface 25 that is the opposite side of the prism surface 24 of the prism plate 22. In this case also, the prism surface 24 has a row of prisms having a number of edge lines 23 in a radial direction formed circumferentially.

In addition, in the present example, the microasperity 25a refers to a portion in which relatively minute concavities and convexities are continuously formed in an array or in a random manner produced by sandblasting, for example. Various shapes such as semispherical shapes, spherical shapes, conical (trapezoidal) shapes, or pyramid (trapezoidal) shapes are possible examples for the shape of the convexity. In addition, the pitches and height (depth) between the convexities and concavities of the microasperity 25a can be determined in consideration of the luminance distribution of the light from the output surface 25.

When the sandblasting is employed, a desired distribution can be obtained for the luminance distribution of the output surface 25 made as a diffusion surface by controlling the blasting pressure and blasting time of the sand used. However, detailed explanation is omitted in this description.

Moreover, in the present example, although an explanation was given regarding a case in which the sandblasting was employed to make the microasperity 25a, the technique is not limited to the sandblasting. As long as the microasperity 25a can be formed as a diffusion surface, it is not necessary to employ the sandblasting, but molding techniques or other techniques can be employed.

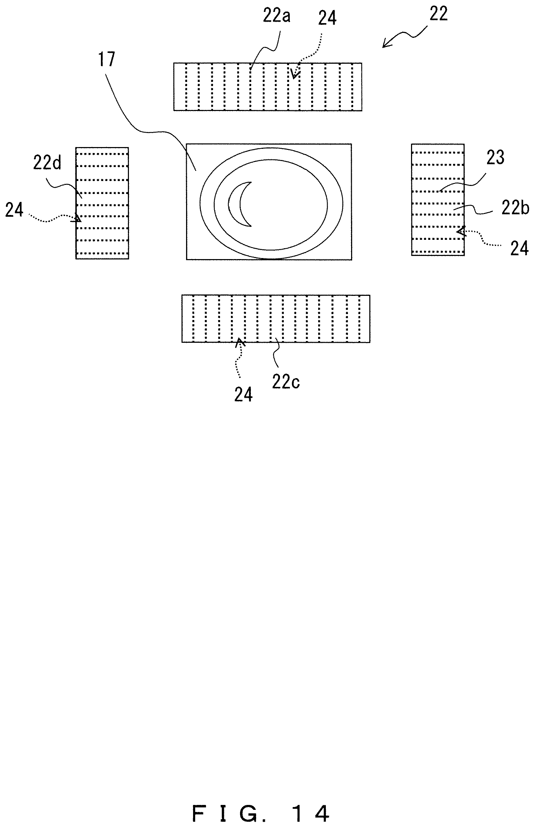

As a result, the light that passed through the prism plate 22 diffuses at the output surface, and a portion of the light is directed to the image sensor 12. Even though specular light enters an image capturing system, the light is low in intensity since it is distant from the optical axis, and thus the system would not fail to achieve the intended result. FIG. 14 is a diagram illustrating an example, not part of the invention, in which the ring-shaped prism plate 22 is configured of separate prism pieces 22a to 22d (four pieces in the present example).

Each of the prism pieces 22a to 22d has a prism surface 24 with a row of prisms that has a number of edge lines 23 facing the image sensor 12 side. By placing these prism pieces 22a to 22d in a rectangular shape as a whole, a prism plate 22 similar to a square-ring shape prism plate can be formed.

In this case also, a number of edge lines 23 in each of the prism pieces 22a to 22d are formed approximately parallel to the radial direction (image sensor 12 side) . Even with such a prism plate 22 constituted of plural prism pieces 22a to 22d, an illumination optical system that reduces the generation of specular noise at the imaging optical system end can be obtained.

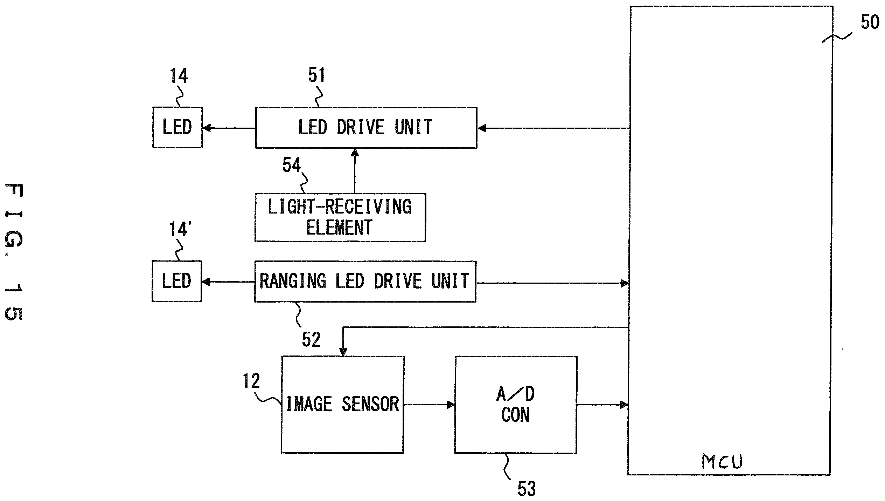

Next, a control block diagram of the imaging device 10 is explained briefly based on FIG. 15.

The drive control system of the imaging device 10 includes an LED drive unit 51 for driving plural LEDs 14, a ranging LED drive unit 52 for driving an LED 14' for measuring distance, an A/D converter 53 for converting an analog output from each pixel of the image sensor 12 into a digital value, and a microcontroller (MCU) 50.

The LED drive unit 51 receives the light from the LED 14 with a light-receiving element 54, and performs an automatic power control in accordance with the light intensity of the received light. The microcontroller (MCU) 50 has an MPU, a ROM and a RAM, and calculates the distance and inclination of an object (a palm in the present example) to be imaged, and subsequently performs processing such as image processing.

In other words, in the image processing performed by the microcontroller (MCU) 50, before driving the LED 14 for illumination, whether the distance of the object to be imaged is appropriate or not (whether the object to be imaged is at a prescribed focal distance within an imaging range or not) and whether the inclination of the object to be imaged is appropriate or not are determined. When both the distance and inclination of the object to be imaged are appropriate, illumination light is applied to the object by emitting light from the LED 14.

Afterwards, an image within the imaging range is captured by the image sensor 12, and the image is stored in a memory through the A/D converter 53. Afterwards, characteristics are extracted from this image. In the extraction of a palm vein pattern, vein data is extracted from the image.

According to the present example, it is possible to obtain an illumination optical system 20 of an image capturing device that has a compact configuration and that can reduce the generation of specular noise at the image capturing optical system end because of the plural LEDs 14 arranged in an annular shape around the image sensor 12, and because of the ring-shaped prism plate 22 in which a prism surface 24 with a row of prisms having a number of radially arranged edge lines 23 formed circumferentially is oriented to face plural LEDs 14.

### [First Embodiment]

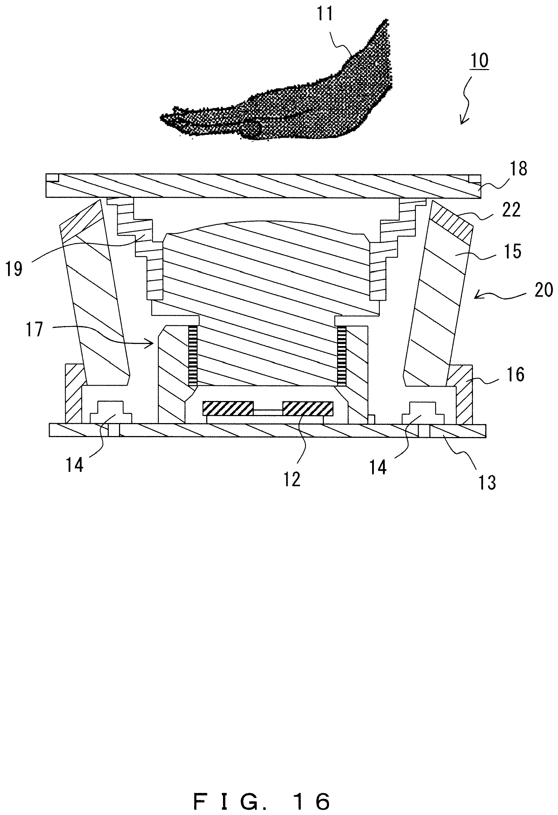

FIG. 16 is a cross-sectional diagram of an image capturing device of the present embodiment. It should be noted that components identical with or corresponding to the components in the First Example are provided with the same reference codes for the explanation.

In the present embodiment, a light guide 15 has a tapered cylinder shape, and its output surface 15a is formed on a sloped surface. A prism plate 22 is arranged so that its prism surface 24 faces the output surface 15a of the light guide 15.

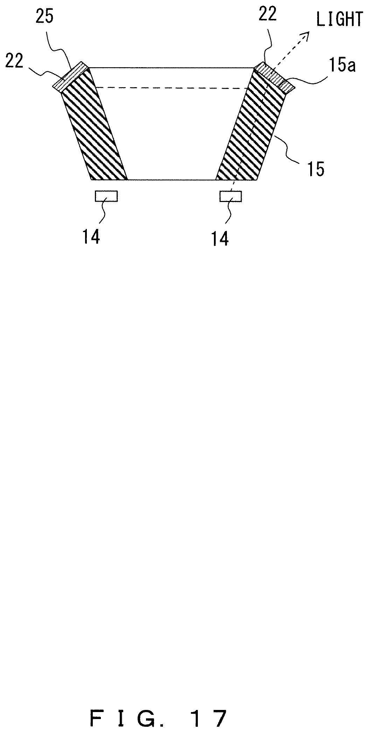

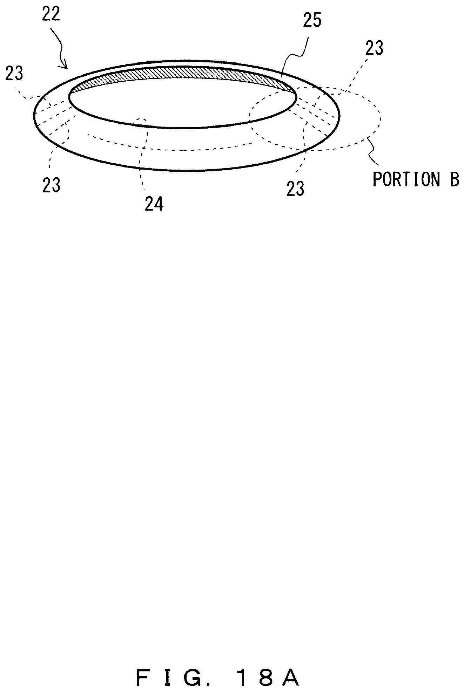

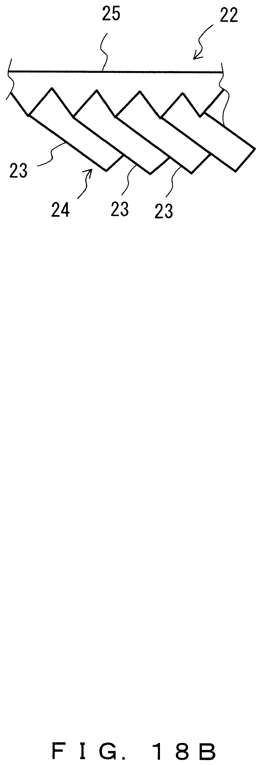

FIG. 17 illustrates an illumination optical system of the embodiment, and FIG. 18A and FIG. 18B illustrate the appearance of the prism plate 22.

In the present embodiment, the output surface 15a of the light guide 15 is a sloped surface of the tapered cylinder shape so that distribution of the illumination light is optimized. As illustrated in FIG. 18A, the ring-shaped prism plate 22 laid on top of the output surface 15a of the light guide 15 has a three-dimensional form. In addition, as illustrated in FIG. 18B, the prism plate 22 has a prism surface 24 with a row of prisms having a number of radially arranged edge lines 23 formed circumferentially, like the prism plate 22 in the First Example .

This row of prisms has an apex angle of 90 degrees, a depth of 0.2 mm, and 180 prisms (with 2 degrees of pitch in the row of prisms) . In this case, similar to the prism plate 22 illustrated in FIG. 11, an illumination optical system 20 that reduces the generation of specular noise at the image capturing optical system can be obtained.

In other words, the illumination light that passed through this prism plate 22 inclines in a tangential direction orthogonal to the direction of the edge lines 23 (radial direction), and therefore the light is not directed in the radial direction. As a result, the generation of specular noise at the image capturing optical system end can be reduced.

In many cases, however, it is necessary to apply illumination light to the center region of the object to be imaged.

In order to do so, a surface opposite from the prism surface 24 (output surface 25) of the prism plate 22 may become a diffusion surface. More specifically, a diffusion surface can be formed by forming a microasperity 25a (see FIG. 13B) on the output surface 25 side of an acrylic prism plate 22 by means of sandblasting and other methods.

As described above, by diffusing and outputting light from the output surface 25 of the prism plate 22, the illumination light is also directed in the radial direction and specular light enters an image capturing center. However, its intensity is low and therefore the specular noise is small. Since the intensity is lower than in the case of the light from the LEDs 14 entering the image capturing center directly, the system would not fail to achieve the intended result.

Additionally, although the light directed toward the center from each specular point is weak diffused light, the light is collected from the diffusion surface of the circumferential output surface 25 and is combined so that the intensity required for illumination can be obtained.

The above-described functions and effects of the diffusion surface are also found in First Example.

According to the present embodiment, similarly to the First Example, it is possible to obtain an illumination optical system 20 of an image capturing device that has a compact and low-cost configuration and that can reduce the generation of specular noise at the image capturing optical system end.

## Claims

1. An illumination optical system of an image capturing device (10), configured to apply light to an object (11) to be imaged and to capture an image by receiving reflected light from the object (11) to be imaged by means of the imaging element (12), comprising:
a plurality of light-emitting elements (14) arranged in a ring around the imaging element (12);
a light guide (15) having an input surface facing the plurality of light-emitting elements (14), configured to guide a light from the plurality of light-emitting elements (14) to irradiate the object (11) with the light through a ring-shaped prism plate (22) located on the output surface of the light guide (15), the light guide (15) being a tapered cylinder in shape, the surface of the light guide (15) being a sloped surface; and
the ring-shaped prism plate (22) having a prism surface (24) facing the plurality of light-emitting elements (14) through the light guide (15) in order to apply light from the plurality of light-emitting elements (14) to the object (11) to be imaged,
wherein the prism surface (24) has a row of prisms having edge lines (23) formed parallel to the radial direction of the prism plate (22).

2. The illumination optical system of an image capturing device (10) according to claim 1,
wherein the ring-shaped prism plate (22) is formed on a sloped surface of a tapered cylinder.

3. The illumination optical system of an image capturing device (10) according to claim 1 or 2,
wherein micro-asperities (25a) are formed on a surface opposite to the prism surface (24) of the ring-shaped prism plate (22).

4. The illumination optical system of an image capturing device (10) according to claim 3,
wherein the micro-asperities (25a) are formed by means of a blasting process.

## Patentansprüche

1. Optisches Beleuchtungssystem für eine Bilderfassungsvorrichtung (10), das so konfiguriert ist, dass es einem abzubildenden Gegenstand (11) Licht zuführt und durch Empfangen von reflektiertem Licht von dem abzubildenden Gegenstand (11) mit Hilfe des Bildgebungselements (12) ein Bild erfasst, mit Folgendem:
mehreren lichtemittierenden Elementen (14), die ringförmig um das Bildgebungselement (12) herum angeordnet sind,
einem Lichtleiter (15) mit einer den mehreren lichtemittierenden Elementen (14) zugewandten Eintrittsfläche, der so konfiguriert ist, dass er Licht von den mehreren lichtemittierenden Elementen (14) zum Bestrahlen des Gegenstands (11) mit dem Licht durch eine ringförmige Prismenplatte (22) leitet, die sich an der Austrittsfläche des Lichtleiters (15) befindet, wobei der Lichtleiter (15) die Form eines sich verjüngenden Zylinders aufweist und es sich bei der Austrittsfläche des Lichtleiters (15) um eine schräge Fläche handelt, und
wobei die ringförmige Prismenplatte (22) eine Prismenfläche (24) aufweist, die den mehreren lichtemittierenden Elementen (14) durch den Lichtleiter (15) hindurch zugewandt ist, so dass dem abzubildenden Gegenstand (11) Licht von den mehreren lichtemittierenden Elementen (14) zugeführt wird,
wobei die Prismenfläche (24) eine Reihe von Prismen mit Kantenlinien (23) aufweist, die parallel zur radialen Richtung der Prismenplatte (22) ausgebildet sind.

2. Optisches Beleuchtungssystem für eine Bilderfassungsvorrichtung (10) nach Anspruch 1,
wobei die ringförmige Prismenplatte (22) an einer schrägen Fläche eines sich verjüngenden Zylinders ausgebildet ist.

3. Optisches Beleuchtungssystem für eine Bilderfassungsvorrichtung (10) nach Anspruch 1 oder 2, wobei auf einer Oberfläche gegenüber der Prismenfläche (24) der ringförmigen Prismenplatte (22) Mikro-Oberflächenunebenheiten (25a) ausgebildet sind.

4. Optisches Beleuchtungssystem für eine Bilderfassungsvorrichtung (10) nach Anspruch 3,
wobei die Mikro-Oberflächenunebenheiten (25a) mit Hilfe eines Strahlverfahrens gebildet sind.

## Revendications

1. Système optique d'éclairage d'un dispositif de capture d'image (10) configuré pour appliquer de la lumière à un objet (11) à représenter et pour capturer une image en recevant une lumière réfléchie provenant de l'objet (11) à représenter au moyen de l'élément d'imagerie (12), comprenant :
une pluralité d'éléments émetteurs de lumière (14) disposés en anneau autour de l'élément d'imagerie (12) ;
un guide de lumière (15) ayant une surface d'entrée faisant face à la pluralité d'éléments émetteurs de lumière (14), configuré pour guider une lumière depuis la pluralité d'éléments émetteurs de lumière (14) pour irradier l'objet (11) à l'aide de la lumière à travers une plaque de prismes en forme d'anneau (22) située sur la surface de sortie du guide de lumière (15), le guide de lumière ayant une forme de cylindre conique, la surface de sortie du guide de lumière (15) étant une surface inclinée ; et
la plaque de prismes en forme d'anneau (22) ayant une surface de prismes (24) faisant face à la pluralité d'éléments émetteurs de lumière (14) à travers le guide de lumière (15) afin d'appliquer de la lumière à partir de la pluralité d'éléments émetteurs de lumière (14) sur l'objet (11) à représenter,
dans lequel la surface de prismes (24) a une rangée de prismes ayant des lignes de bord (23) formées parallèlement à la direction radiale de la plaque de prismes (22).

2. Système optique d'éclairage d'un dispositif de capture d'image (10) selon la revendication 1,
dans lequel la plaque de prismes en forme d'anneau (22) est formée sur une surface inclinée d'un cylindre conique.

3. Système optique d'éclairage d'un dispositif de capture d'image (10) selon la revendication 1 ou 2,
dans lequel des micro-aspérités (25a) sont formées sur une surface opposée à la surface de prismes (24) de la plaque de prismes en forme d'anneau (22).

4. Système optique d'éclairage d'un dispositif de capture d'image (10) selon la revendication 3,
dans lequel dans les micro-aspérités (25a) sont formées au moyen d'un processus de sablage.
